# EUROPEAN PATENT SPECIFICATION

(11) **EP 3 420 005 B1**
(45) Date of publication and mention of the grant of the patent: **15.04.2020**
(21) Application number: 17708078.5
(22) Date of filing: 16.02.2017
(51) Int. Cl.: C08F 220/34, C08F 8/28, D21H 17/37

(54) **GLYOXALATED POLYACRYLAMIDE TERPOLYMER, BASE COPOLYMER THEREOF, COMPOSITIONS CONTAINING SAME, USES IN PAPERMAKING AND PRODUCTS THEREOF**
GLYOXALIERTES POLYACRYLAMIDTERPOLYMER, BASISCOPOLYMER DAVON, ZUSAMMENSETZUNG DAMIT, VERWENDUNGEN IN DER PAPIERHERSTELLUNG UND PRODUKTE DARAUS
TERPOLYMÈRE DE POLYACRYLAMIDE GLYOXALÉ, COPOLYMÈRE DE BASE DE CELUI-CI, COMPOSITIONS LES CONTENANT, UTILISATIONS DANS LA FABRICATION DE PAPIER ET DE PRODUITS DE CEUX-CI

(30) Priority: 26.02.2016 US 201662300144 P
(43) Date of publication of application: 02.01.2019
(73) Proprietor: Buckman Laboratories International, Inc, Memphis, TN 38108-0305 (US)
(72) Inventor: TEKOBO, Samuel, Redmond, TN 38108-0305 (US); CASTER, John, Memphis, TN 38108-0305 (US)
(74) Representative: Dehns
(86) International application number: PCT/US2017/018025
(87) International publication number: WO 2017/146965

(56) References cited:
- WO-A1-2015/075318
- WO-A1-2015/100125
- WO-A2-2006/068964
- US-B2- 8 435 382

## Description

### BACKGROUND OF THE INVENTION

The present invention relates to a glyoxalated polyacrylamide terpolymer, a base copolymer thereof, compositions containing the terpolymer, and their use for papermaking and products thereof.

Papermaking generally includes forming an aqueous pulp composition and then sheeting and drying the pulp to form a desired paper product. Various additives have been used to aid in the colloidal, fines, and drainage management at the wet end of the paper machine. These additives have included materials such as cationic starch, low molecular weight copolymers of acrylamide and diallyldimethylammonium chloride (DADMAC), a terpolymer of acrylamide/DADMAC and glyoxal, and other materials.

U.S. Pat. No. 8,435,382 relates to storage-stable glyoxalated polyacrylamide polymers and high solids aqueous compositions formulated with them. The glyoxalated polyacrylamide polymer is obtained from the reaction between glyoxal and a cationic polyacrylamide base polymer comprising at least about 25% by weight cationic monomer. The polyacrylamide base polymer comprises acrylamide monomer and cationic monomer copolymerizable with the acrylamide.

U.S. Pat. Appln. Publication No. 2011/112224 A1 relates to surface applied strength additives for paper, wherein the additives are a coating composition comprising a mixture or blend of a nearly neutral polyacrylamide, a cationic polymer, and starch. The cationic polymer of the mixtures can be prepared from monomers selected from dimethylaminoethyl(meth)acrylate, [2-(methacryloyloxy) ethyl]trimethylammonium chloride, [3-(methacryloylamino) propyl]trimethylammonium chloride, [2-(acryloyloxy)ethyl] trimethylammonium chloride, [3-(acryloyloxy)propyl] trimethylammonium chloride, N,N-dimethylamino propyl(meth)acrylamide, and others mentioned in the reference.

WO 2006/068964 A1 discloses certain reactive cationic resins comprising a dialdehyde reactive copolymer produced from a comonomer which is dialdehyde reactive, a cationic comonomer and a dialdehyde. The cationic comonomers include [2-(methacryloyloxy) ethyl]trimethylammonium chloride, [3-(methacryloyloxy) propyl]trimethylammonium chloride, [2-(acryloyloxy)ethyl] trimethylammonium chloride, and [3-(acryloyloxy)propyl] trimethylammonium chloride.

It would be desirable to provide glyoxalated polyacrylamide products having good shelf life which can provide optimized retention and drainage properties, and paper strength.

### SUMMARY OF THE PRESENT INVENTION

A feature of the present invention is to provide glyoxalated polyacrylamide terpolymers having good shelf life, which can be used for papermaking or other methods.

Another feature of the present invention is to provide a superior additive system for papermaking using the indicated terpolymers for improving wet-end drainage and retention.

A further feature of the present invention is to provide a superior additive system for papermaking using the indicated terpolymers to provide good dry and/or temporary wet strength in paper products that incorporate them.

An additional feature of the present invention is to provide a process for making the glyoxalated polyacrylamide terpolymers.

Another feature of the present invention is to provide base copolymers of the glyoxalated polyacrylamide terpolymers, which can be used for broke treatment in a papermaking system.

Additional features and advantages of the present invention will be set forth in part in the description that follows, and in part will be apparent from the description, or may be learned by practice of the present invention. The objectives and other advantages of the present invention will be realized and attained by means of the elements and combinations particularly pointed out in the description and appended claims.

To achieve these and other advantages, and in accordance with the purposes of the present invention, as embodied and broadly described herein, the present invention relates to a terpolymer comprising at least one glyoxal monomer unit, at least one primary amide-containing monomer unit, and at least one cationic monomer unit, wherein the at least one cationic monomer unit is or includes a quaternary ammonium alkyl(meth)acrylate salt, said terpolymer having structure (I): 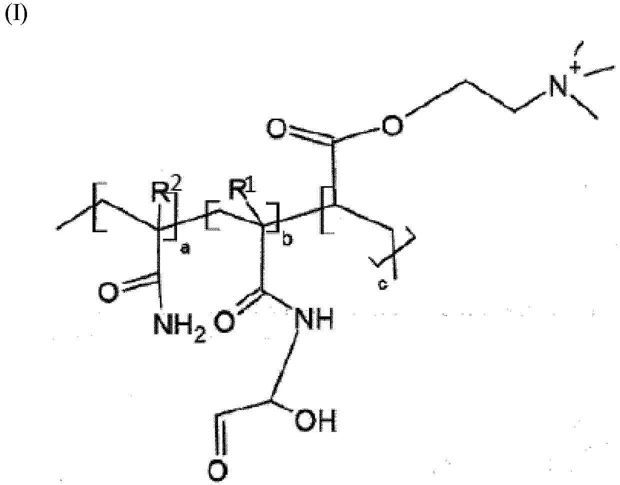 wherein a is 1 to 6600 units, b is 1 to 3300 units, and c is 1 to 5300 units which randomly or non-randomly repeat in structure (I), and each of R¹ and R², that are the same or different, represent H, C₁ alkyl, C₂ alkyl, C₃ alkyl, or C₄ alkyl, wherein total weight percent of a units is from 17% to 23%, total weight percent of b units is from 32% to 22%, and total weight percent of c units is from 51% to 55%, based on 100% of the terpolymer, and wherein said terpolymer has a weight average molecular weight ranging from 500,000 Daltons to 2,000,000 Daltons.

The present invention further relates to a polymer composition comprising the indicated terpolymer, and an aqueous medium in which the terpolymer is dispersed.

The present invention further relates to a paper product comprising the indicated terpolymer.

The present invention further relates to a product comprising a paper layer containing the indicated terpolymer, wherein the product is paper sheeting, paperboard, tissue paper, or wall board.

The present invention further relates to a process of making paper which comprises absorbing an amount of the indicated terpolymer on cellulose papermaking fibers in an aqueous suspension, forming the suspension into a web, and drying the web.

The present invention further relates to a process for making a terpolymer comprising: copolymerizing from 20% to 45%, by weight, primary amide-containing monomer and from 30% to 55%, by weight, cationic monomer copolymerizable with the primary amide-containing monomer to form a base copolymer, wherein the cationic monomer comprises a quaternary ammonium alkyl(meth)acrylate salt; and copolymerizing the base copolymer with glyoxal to form a terpolymer, comprising at least one pendant glyoxal monomer unit, said terpolymer having structure (I): 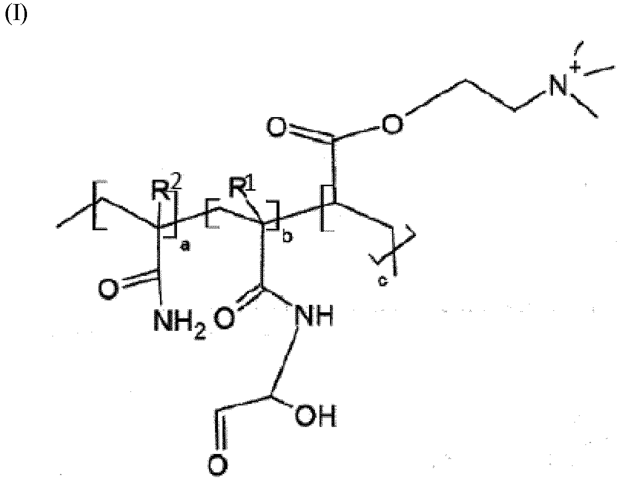 wherein a is 1 to 6600 units, b is 1 to 3300 units, and c is 1 to 5300 units which randomly or non-randomly repeat in structure (I), and each of R¹ and R², that are the same or different, represent H, C₁ alkyl, C₂ alkyl, C₃ alkyl, or C₄ alkyl, wherein total weight percent of a units is from 17% to 23%, total weight percent of b units is from 32% to 22%, and total weight percent of c units is from 51% to 55%, based on 100% of the terpolymer, and wherein said terpolymer has a weight average molecular weight ranging from 500,000 Daltons to 2,000,000 Daltons.

It is to be understood that both the foregoing general description and the following detailed description are exemplary and explanatory only and intended to provide a further explanation of the present invention, as claimed.

The accompanying drawings, which are incorporated in and constitute a part of this application, illustrate some of the features of the present invention and together with the description, serve to explain the principles of the present invention.

### BRIEF DESCRIPTION OF THE DRAWINGS

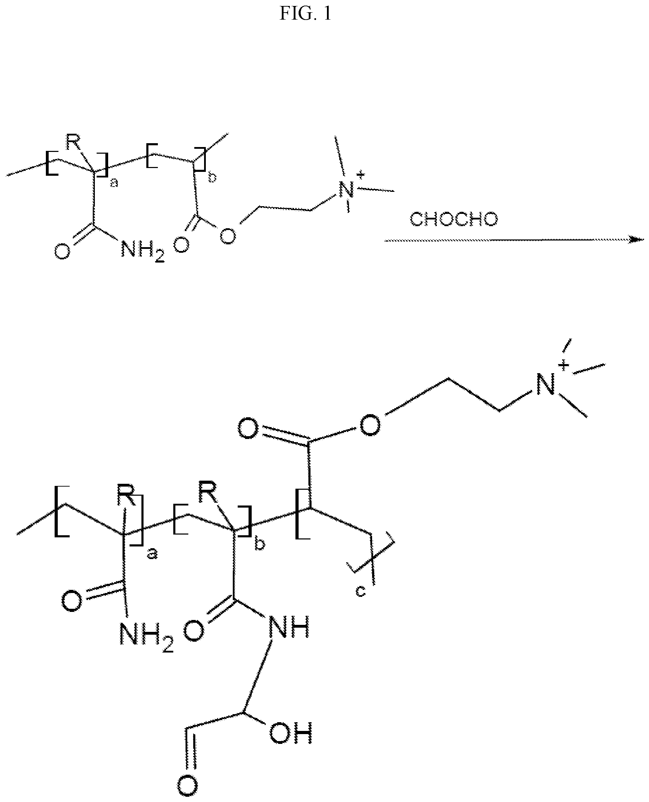

FIG. 1 shows a reaction scheme of a reaction of a base polymer with glyoxal as one example of the present invention.

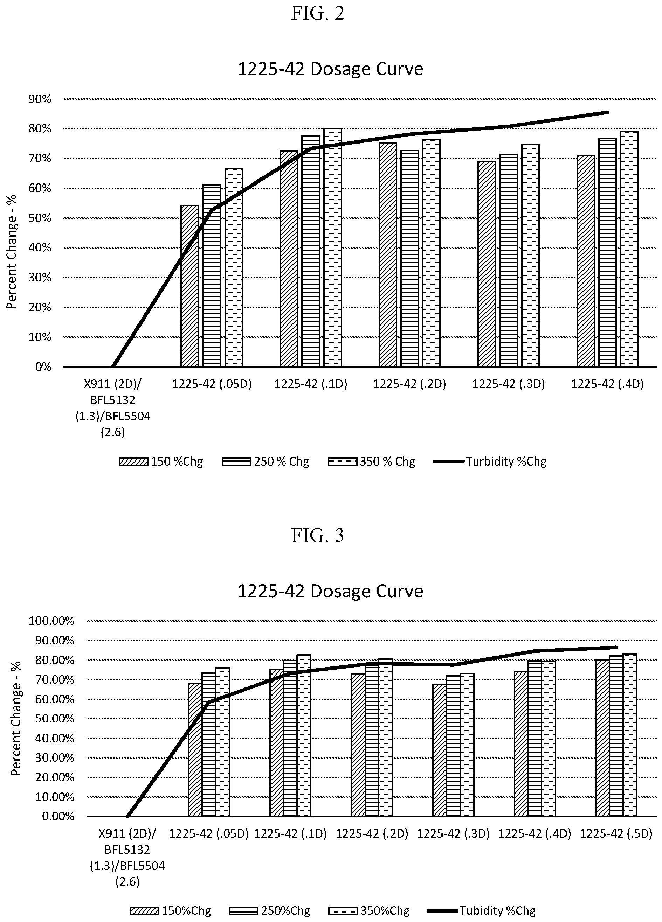

FIG. 2 is a bar graph showing results for drainage time and turbidity for bench scale tests performed on paper mill furnish using a glyoxalated polyacrylamide terpolymer at different dosages according to an example of the present invention as compared to a comparison additive program.
FIG. 3 is a bar graph showing results for drainage time and turbidity for bench scale tests performed on paper mill furnish using a glyoxalated polyacrylamide terpolymer after one month storage at room temperature at different dosages according to an example of the present invention as compared to a comparison additive program.

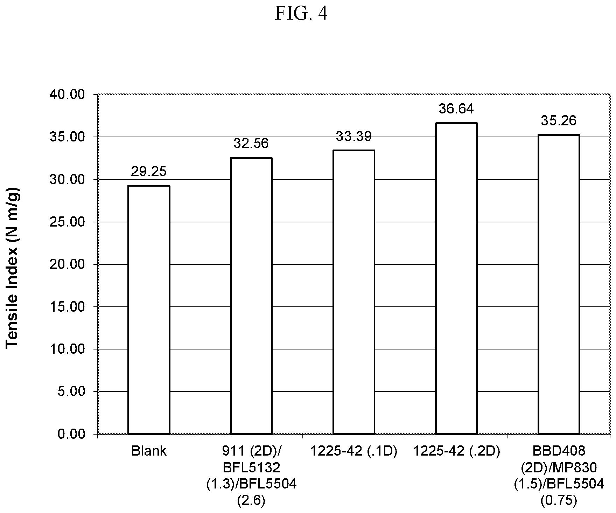

FIG. 4 is a bar graph showing results of strength tests based on tensile index conducted on handsheets obtained from paper mill furnish treated with glyoxalated polyacrylamide terpolymer at different dosages according to an example of the present invention as compared to comparison additive programs with and without enzyme.

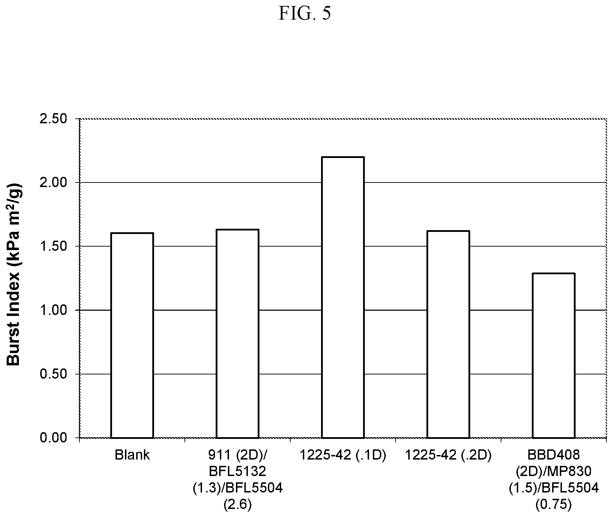

FIG. 5 is a bar graph showing results of strength tests based on burst index conducted on handsheets obtained from paper mill furnish treated with glyoxalated polyacrylamide terpolymer at different dosages according to an example of the present invention as compared to comparison additive programs with and without enzyme.

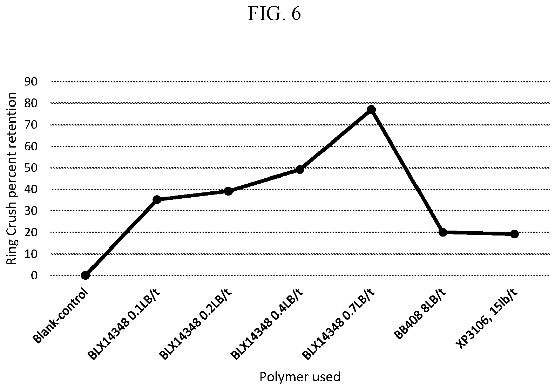

FIG. 6 is a graph showing results of strength tests based on Ring Crush strength retention (%) determined for handsheets after storage in a high humidity chamber, wherein the handsheets were obtained from old corrugated container (OCC) paper mill furnish treated with glyoxalated polyacrylamide terpolymer at different dosages according to an example of the present invention as compared to comparison additive programs and a blank (no polymer).

### DETAILED DESCRIPTION OF THE PRESENT INVENTION

The present invention relates, in part, to glyoxalated polyacrylamide terpolymers that can have extended shelf life and represent superior additives for papermaking, or other processes. The glyoxalated polyacrylamide terpolymers of the present invention can be used as papermaking additives providing paper with strength and papermaking retention/drainage (dewatering) rates, which are better than non-treated systems and can be as good as, if not superior to, previous treatment programs. Efforts to control papermaking performance can be challenging since wet end retention, dewatering rate, and turbidity or other properties can be competitive properties. That is, enhancements made to one may adversely impact another. Use of the indicated terpolymers of the present invention can provide well-balanced or mutually improved performances in these and other performance properties associated with papermaking.

The glyoxalated polyacrylamide terpolymers contain at least one glyoxal monomer unit, at least one primary amide-containing monomer unit, and at least one cationic monomer unit. The at least one cationic monomer unit is or includes a quaternary ammonium alkyl(meth)acrylate salt. As indicated, the glyoxalated polyacrylamide terpolymers can have extended shelf life, such as up to about one year (365 days), or longer. As used herein, "shelf life" can refer to the length of time in which the terpolymer remains stable, which can be determined by measuring the viscosity of the terpolymer solution until the viscosity increases beyond a limit, such as more than approximately 7 cps in storage at 37°C, which can correlate to significant gelation. The terpolymers of the present invention can be applied in usual wet end treatment locations of paper machines or other locations. As shown by results of experiments described herein, use of the glyoxalated polyacrylamide terpolymers on paper mill furnish can provide paper with dry strength (e.g., dry strength impact), temporary wet strength, retention, drainage (dewatering) rate, or more than one of these that are as good as, if not superior to comparative additive programs that use commercial materials. Increased papermaking retention efficiencies can be obtained using the glyoxalated polyacrylamide terpolymers at a relatively low dose, such as a dose as low as 0.1 pounds/ton (50 ppm by weight), or other dosages. Use of the glyoxalated polyacrylamide terpolymers in an additive system in wet end treatments, such as at a concentration of 0.01% to 5% actives or other concentrations, can decrease white water turbidities and concurrently increase drainage rates. The terpolymers or base copolymers of the terpolymer of the present invention can be used in coated or uncoated broke treatment in papermaking systems.

As indicated, the glyoxalated polyacrylamide terpolymers of the present invention contain at least one glyoxal monomer unit, at least one primary amide-containing monomer unit, and at least one cationic monomer unit, wherein the at least one cationic monomer unit is or includes a quaternary ammonium alkyl(meth)acrylate salt. The glyoxalated polyacrylamide terpolymer has structure (I): 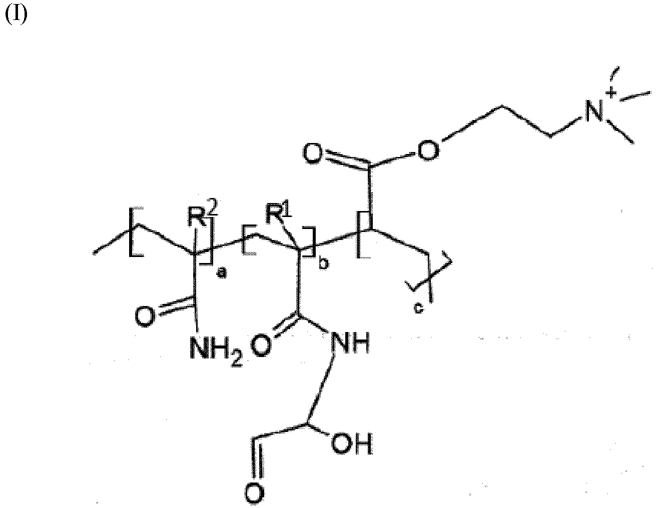 wherein a is 1 to 6600 units, b is 1 to 3300 units, and c is 1 to 5300 units which randomly or non-randomly repeat in structure (I), and R¹ and R² may be the same or different and represent H, C₁ alkyl, C₂ alkyl, C₃ alkyl, or C₄ alkyl. The coefficient a can be 100 to 5000 units (or 50 to 6000 units, 200 to 4000 units, 300 to 3000 units, 500 to 2500 units, 750 to 2000 units, 1000 to 4000 units, 1500 to 4000 units, or 2000 to 5500 units), b is 100 to 2500 units (or 50 to 3000 units, 150 to 2500 units, 250 to 2000 units, 300 to 1500 units, or 500 to 1200 units), and c is 100 to 4000 units (or 50 to 4500 units, 150 to 4000 units, 250 to 3500 units, 350 to 3000 units, 500 to 2500 units, 750 to 2000 units, or 1000 to 2000 units). The total weight (or mole) percent of a units is from 17% to 23%. The total weight (or mole) percent of b units is from 22% to 32%. The total weight (or mole) percent of c units is from 51% to 55%, based on 100% of the terpolymer. The total weight (or mole) percent of a units can be from 19% to 21%. The total weight (or mole) percent of b units can be from 25% to 28%. The total weight (or mole) percent of c units can be from 52% to 54%, based on 100% of the terpolymer. The units a, b, and c of structure (I) can compose at least 60%, or at least 70%, or at least 80%, or at least 90%, or at least 95%, or at least 98%, or at least 99%, or 100% of all (100%) of the monomeric units of the glyoxalated polyacrylamide terpolymer.

Structure (I) is illustrated with unit a derived from acrylamide units and unit c derived from ethanaminium,N,N,N-trimethyl-2-((1-oxo-2-propenyl)oxy)-chloride units. Unit a can be derived from other primary amide-containing monomers, and/or unit c can be derived from other quaternary ammonium alkyl(meth)acrylate salts, including those described herein.

The molecular weight of the glyoxalated polyacrylamide terpolymer ranges from 500,000 Daltons to 2,000,000 Daltons, or from 700,000 Daltons to 1,750,000 Daltons, or from 900,000 Daltons to 1,500,000 Daltons, 1,000,000 Daltons to 1,250,000 Daltons. All molecular weights herein are weight average molecular weights measured by gel permeation chromatography (GPC) unless indicated otherwise.

The glyoxalated polyacrylamide terpolymers of the present invention include repeating units from at least one or more primary amide-containing monomer compounds. The primary amide-containing monomer unit can be acrylamide, methacrylamide, ethacrylamide, crotonamide, N-butyl acrylamide, N-methyl acrylamide, N-methyl methacrylamide, N-ethyl acrylamide, N-ethyl methacrylamide, N-isopropyl (meth)acrylamide, or other primary-amide monomer compound, or any combination thereof. The primary amide-containing monomer unit preferably can be acrylamide.

The quaternary ammonium alkyl(meth)acrylate salt that can be used for the cationic monomer units in the glyoxalated polyacrylamide terpolymers of the present invention can have structure (II): 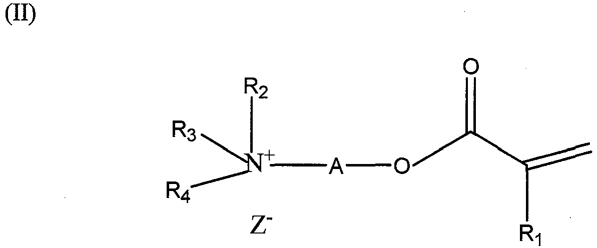 wherein R₁ is hydrogen or methyl, A is a straight chain alkylene group having 2 or 3 carbon atoms, Z is a halogen, and R₂, R₃, and R₄, which can be the same or different, is a C₁, C₂, or C₃ alkyl group or benzyl group. Z can be Cl, F, Br, or I.

The quaternary ammonium alkyl(meth)acrylate salt can be:
ethanaminium,N,N,N-trimethyl-2-((1-oxo-2-propenyl)oxy)-chloride (also referred to as (2-(acryloyloxy)ethyl)trimethylammonium chloride),
(2-(methacryloyloxy)ethyl)trimethylammonium chloride,
(3 -(acryloyloxy)propyl)trimethylammonium chloride,
(3 -(methacryloyloxy)propyl)trimethylammonium chloride,
(2-(acryloyloxy)ethyl)benzyl-dimethylammonium chloride,
(2-(methacryloyloxy)ethyl)benzyl-dimethylammonium chloride,
(3 -(acryloyloxy)propyl)benzyl-dimethylammonium chloride,
(3 -(methacryloyloxy)propyl)benzyl-dimethylammonium chloride,
or any combination thereof.

The quaternary ammonium alkyl(meth)acrylate salt preferably can be ethanaminium,N,N,N-trimethyl-2-((1-oxo-2-propenyl)oxy)-chloride.

As indicated, the polyacrylamide terpolymers of the present invention are glyoxalated. Unit b in structure (I) can be derived in part from glyoxal. Glyoxal can react with amide groups in the base copolymer, such as described herein, to form a pendant glyoxalated group, such as shown by the structure of unit b in structure (I). Glyoxal ("CHOCHO") is a dialdehyde that has the structure O=C(H)-C(H)=OH.

The glyoxalated polyacrylamide terpolymer can be the reaction product of glyoxal and a base copolymer of the primary amide-containing monomer and the cationic monomer (quaternary ammonium alkyl(meth)acrylate salt). The base copolymer can be comprised of the indicated units a and c of structure (I). The primary amide-containing monomer unit can provide the primary reaction sites on the base polymer backbone to which the glyoxal substituents can be subsequently attached.

The base copolymer, or the base polymer product of the copolymerization of the primary amide-containing monomer and cationic monomer, for use in the present invention, can be prepared by free radical polymerization in an aqueous system. To prepare a base copolymer of a desired chemical composition and monomer distribution, the full complement of the cationic monomer(s), primary amide-containing monomer(s), and any other monomers to be incorporated into the base copolymer can be added all at once at the beginning of the polymerization reaction. Alternatively, the cationic monomer(s), primary amide-containing monomer(s), and any other monomer(s) to be included in the base copolymer can be added continuously over the time course of the polymerization reaction. Still other options for reacting the cationic monomers with the primary amide-containing monomer can be recognized by those skilled in the art, such as sequentially, batch, semi-batch, and the like. Commonly used free radical initiators that can be used in the present invention include various peroxide, azo compounds, potassium and ammonium persulfates, and a redox initiator system.

The base copolymer product can comprise from 20% to 45%, by weight, the primary amide-containing monomer and from 30% to 55%, by weight, the cationic monomer copolymerizable with the primary amide-containing monomer, or from 25% to 40%, by weight, the primary amide-containing monomer and from 35% to 50%, by weight, the cationic monomer, or from 30% to 35%, by weight, the primary amide-containing monomer and from 40% to 45%, by weight, the cationic monomer, or other range values. The base copolymer can have a weight average molecular weight ranging from 500,000 Daltons to 1,600,000 Daltons, or from 750,000 Daltons to 1,250,000 Daltons, or from 900,000 Daltons to 1,100,000 Daltons, or other values. The molecular weight can be influenced by changing the reaction temperature, the level of solids in the reaction, the amount of initiator, the amount of chain transfer agent, and by other methods used by those skilled in the art. Examples of suitable chain transfer agents include, but are not limited to, isopropyl alcohol, mercaptans, sodium formate, and sodium acetate.

The base copolymer optionally can contain at least one non-nucleophilic monomer to reduce amide-glyoxal cross-linking reactions during glyoxalation of the base copolymer in a separate subsequent reaction. Examples of suitable non-nucleophilic monomers include, but are not limited to, vinyl acetate, N-vinylpyrrolidone, N,N-dimethylacrylamide, acrylonitrile, styrene, hydroxyl alkyl(meth)acrylates and the like. The weight percent of this non-nucleophilic unit can range from zero to 45 (e.g., 0 wt% to 45 wt%, 1 wt% to 40 wt%, 5 wt% to 35 wt%, 10 wt% to 30 wt%, 15 wt% to 25 wt% and so on), based on total weight of base copolymer.

The base copolymer can be isolated from the reaction solution after synthesis and dried to provide a dry solid particulate, e.g., as a flowable dry powder, form of the product. The base copolymer can be isolated from the reaction solution by dewatering of the base copolymer, and can be dried and formed into a powder by spray drying or other drying techniques known. The base copolymer is stable in the dry particulate form. In view of this, the base copolymer in dry solid particulate form can be handled, transported and stored in less bulk volumes as compared to fluid dispersions or slurries of the material. Another advantage of the base copolymer is that the base copolymer can be glyoxalated anywhere. The base copolymer does not need to be glyoxalated immediately after synthesis. The base copolymer can be handled and stored as a stable material until glyoxalation at a later date. The base copolymer can be glyoxalated offsite or onsite (in situ) at the papermaking mill where it will be applied. The base copolymer itself can be applied as the active agent in broke treatment in a papermaking system. The glyoxalation step can be omitted for coated and uncoated broke treatment using the base copolymer itself as the active agent.

The base copolymers are glyoxalated to provide terpolymers that are particularly suitable for use as additives for papermaking, such as additives for wet end processing and paper strength development.

A glyoxalation of a base copolymer according to an exemplary illustration is schematically indicated in FIG. 1.

The acrylamide or other primary amide-containing monomer in the base copolymer can provide the primary reaction sites on the base polymer backbone to which the glyoxal substituents are attached. Glyoxal can react with amide groups to form a pendant glyoxalated group, such as shown by the structure of unit b in structure (I). In another reaction scheme (not shown), glyoxal can be used to crosslink two base copolymer backbone chains of the terpolymer. If such crosslinking is desired, the base copolymer can be formulated to have a sufficient number of acrylamide or other primary amide-containing monomers in its structure (pendant amide groups) so that, once functionalized with glyoxal, the resulting polymer can be thermosetting. As used herein, "thermosetting" and "crosslinking", and similar terms are intended to embrace the structural and/or morphological change that occurs, for example, by covalent chemical reaction or ionic interaction between separate molecules in a composition. If crosslinking is undesired in the terpolymer product, as indicated, non-nucleophilic monomers may be incorporated into the base copolymer to reduce amide-glyoxal cross-linking reactions during glyoxalation of the base copolymer.

As a synthesis method for the glyoxalated polyacrylamide terpolymers of the present invention, the base copolymer can be reacted with glyoxal at a pH of 7 to 10, or other pH values. The weight ratio of the glyoxal to the base copolymer can range from about 0.01:1 to about 0.6:1, or from about 0.1:1 to about 0.3:1, respectively, or other ratios. The reaction temperature can be maintained in the range of 15°C to 50°C, or other suitable reaction temperatures. A buffer can be added to control solution pH throughout the reaction. Suitable buffers can be or include a sodium phosphate, sodium pyrophosphate, borax, and/or Tris. Once the solution reaches a desired viscosity, dilute acid can be added to lower the pH and quench the reaction. The final pH of the solution can range from 2 to 5, or other pH values. Alternatively, either the glyoxal solution or the base copolymer solution can be added to the reaction mixture slowly over time. As an option, both the glyoxal and the base polymer solution can be added to the reaction mixture slowly over time. Still other options for reacting glyoxal and a base polymer recognized by those skilled in the art may be adapted for application to the synthesis of the terpolymers of the present invention.

The glyoxalated polyacrylamide terpolymer reaction products of the present invention can be used directly from the reaction solution, or can be isolated from the reaction solution and re-dispersed in another liquid medium for handling and storage before use. The glyoxalated polyacrylamide terpolymer products of the present invention can be dispersed in an aqueous medium to provide additive compositions. The compositions of glyoxalated polyacrylamide terpolymers according to the present invention can be readily employed or stored for later use in the manufacture of paper as an aqueous solution. The compositions are highly storage stable, even at temperatures exceeding room temperature. It is not necessary to add stabilizers or other storage-life promoting additives to the polymer compositions according to the present invention to achieve significantly improved shelf life over conventional glyoxalated polyacrylamide copolymer formulations. Thus, as one option, the terpolymer and/or a formulation containing the terpolymer has 0 wt% stabilizers, and/or scavengers, and/or surfactants. The glyoxalated polyacrylamide terpolymer compositions according to the present invention do not need extraneous stabilizers, aldehyde scavengers, and/or surfactants, and the like, to achieve the improvements in storage stability, although these materials are not categorically excluded. As an option, the glyoxalated polyacrylamide terpolymer compositions of the present invention can contain no such stabilizer additives or can be essentially free of them (that is, contain < 0.1 wt% total stabilizers, scavengers (e.g. aldehyde scavengers), and/or surfactants).

Generally, the glyoxalated polyacrylamide terpolymer compositions according to the present invention, such as when intended for use as a paper strengthening agent or retention/drainage additive, can have a solids concentration in an aqueous medium (e.g., deionized water or tap water) of from about 1% and about 30%, by weight, or from about 10% to about 30%, by weight, or from about 11% to about 15%, by weight or from about 12% to about 15%, by weight, or other percentages, on a weight/volume (w/v) basis.

The freshly-synthesized glyoxalated polyacrylamide terpolymers of the present invention can be immediately used or can be stored before use. An advantage of the glyoxalated polyacrylamide terpolymers of the present invention is that the terpolymers can be stably stored, such as in aqueous compositions, for extended periods of time before use. The glyoxalated polyacrylamide terpolymer can have a shelf life of at least 21 days, or at least 30 days, or at least 60 days, or at least 90 days, or at least 180 days, or up to or over one year (365 days or more), or longer periods of time, or from 21 days to 365 days, or from 30 days to 365 days, or from 60 days to 365 days, or from 90 days to 365 days, or from 180 days to 365 days, or other time periods, such as when stored at temperature from 35 to 85° F (1.7 to 29° C).

When using a glyoxalated polyacrylamide terpolymer composition according to the present invention in papermaking, the terpolymer can be added at any time before, during, and/or after the paper is formed. The composition can be conveniently added at the wet end of a papermaking facility to the dilute cellulose fiber suspensions, normally at a point when wet strength resins are conventionally added. Alternatively, the composition can be added to a previously prepared paper by padding, spraying, immersing, and/or printing and the like.

When used as a wet end additive, the terpolymer can be contacted with paper or paper board making pulp in a pulp stock prior to draining to provide a treated pulp suspension, then draining the pulp suspension, and forming a drained treated pulp suspension into paper or paperboard. The terpolymer can be used in a wet end process of making paper which comprises absorbing an amount of the terpolymer on cellulose papermaking fibers in aqueous suspension, forming the suspension into a web, and drying the web. The cellulose papermaking fibers can comprise broke.

The amount of the terpolymer used can be an amount effective to increase at least one paper property selected from retention, drainage rate or paper dry strength or high humidity dry strength retention, as compared to paper made with the suspension absent the terpolymer. The amount of the terpolymer can be effective to increase at least one paper property (e.g., retention or drainage rate or paper dry strength) in an amount of at least 10%, or at least 12.5%, or at least 15%, or at least 20%, or at least 30% or other increases, as compared to paper made with the suspension absent the terpolymer. The amount of the terpolymer can be effective to increase at least one paper property (e.g., retention or drainage rate) in an amount of at least 50%, or at least 60%, or at least 70%, or at least 80%, or at least 90%, or at least 100%, or other increases, as compared to paper made with the suspension absent the terpolymer. As an example, the paper property achieved can be a ring crush percent retention (or high humidity strength retention) of at least 30% (when stored at high humidity for at least 24 hours) compared to the original dry strength. This ring crush percent retention (or high humidity strength retention) can be at least 40%, at least 50%, at least 60%, at least 70% or at least 75%, such as from 30% to 80% or from 40% to 80%, or from 50% to 80%, or from 60% to 80%.

The composition can be added to paper pulp over a wide range of pH values. The composition can be added to the paper pulp at a pH of from about 5 to about 8, such as a pH from 5.5 to 7.0, or other pH values. Compositions described above can be readily absorbed by the cellulose fibers at these pH values.

A paper product can be provided comprising the glyoxalated polyacrylamide terpolymer of the present invention. The product may comprise at least one paper layer or web containing the glyoxalated polyacrylamide terpolymer, such as paper sheeting, paperboard, tissue paper, or wall board. The composition is not limited to treating any particular type of paper and can find application in Kraft paper, sulfite paper, semichemical paper, recycled paper, and the like, including paper produced using bleached pulp, unbleached pulp, or combinations thereof.

The amount of added glyoxalated polyacrylamide terpolymer can be as low as about 0.03 wt% of the dry weight of the cellulose fibers, and can be about 10% by weight or lower or higher. An amount in the range of about 0.1 wt% to 5 wt% of the dry paper weight can be used. The amount of glyoxalated polyacrylamide terpolymer added, on a solids basis, can be expressed in terms of from about 0.1 pound to about 10 pounds (lb.) terpolymer/ton dry fiber, or from about 0.1 lb. to about 5 lb. terpolymer/ton dry fiber, or from about 0.1 lb. to about 3 lb. terpolymer/ton dry fiber, or from about 0.1 lb. to about 2 lb. terpolymer/ton dry fiber, or from about 0.1 lb. to about 1 lb. terpolymer/ton dry fiber, where 1 pound/ton is 500 ppm by weight.

The present invention will be further clarified by the following examples, which are intended to be purely exemplary of the present invention, in which all percentages, parts, ratios and the like are proportions by weight unless otherwise specified.

### EXAMPLES

In these experiments, a base copolymer was prepared from acrylamide and quaternary ammonium alkyl(meth)acrylate salt monomers, and the resulting base copolymer was glyoxalated. The resulting glyoxalated polyacrylamide terpolymer was tested for dry and wet strengths, water retention, drainage, and shelf life (stability).

### Example 1

### Synthesis of Base Copolymer

Into a reaction vessel, equipped with a reflux condenser, stirrer, and thermometer, were added with water, sodium formate, and a first portion of ethanaminium,N,N,N-trimethyl-2-((1-oxo-2-propenyl)oxy)-chloride, referred to herein by the abbreviation "DMAEAQ" (40% weight aqueous solution of DMAEAQ). The vessel was then heated to 55°C and maintained at this temperature. To the vessel were slowly added acrylamide ("Am"), an additional (2nd) portion of DMAEAQ, and ammonium persulfate. The addition time of acrylamide and DMAEAQ was 300 minutes and the addition time of ammonium persulfate was 330 minutes. The acrylamide was a 40-55% by weight aqueous solution of Am. The additional portion of DMAEAQ was added over this 300 minute addition period. The reaction mixture was then heated at 70°C for an additional 1 hour and was then cooled. The base copolymer was isolated from the reaction solution by dewatering, and dried and formed into a powder by spray drying. Table 1 lists the addition dosages of all the compounds used in synthesizing the base copolymer.

**Table 1. Base Copolymer preparation dosages and MW.**

| | Water (g) | Sodium formate (g) | DMAEAQ, 1st(g) | Acrylamide (g) | DMAEAQ, 2nd (g) | Ammonium persulfate (g) | Total DMAEAQ (wt%) | Weight average molecular weight (Da) |
|---|---|---|---|---|---|---|---|---|
| Base Copolymer | 1000 | 2 | 20 | 50 | 20 | (2% in water) | 40 | 2M |

### Example 2

### Glyoxalation

Compositions were prepared from the base copolymer dry powder of acrylamide: ethanaminium,N,N,N-trimethyl-2-((1-oxo-2-propenyl)oxy)-chloride ("Am:DMAEAQ") which was prepared in Example 1.

An amount of the dry powder base copolymer of Example 1 was made down in a reaction vessel by mixing the powdered base copolymer, glyoxal, and sodium pyrophosphate (as a buffer) for no more than one hour at a temperature of 25°C-30°C. After 60 minutes of mixing, the pH of the reaction mixture was raised to 9 using sodium hydroxide solution (2% NaOH). Once the viscosity of the mixture reached about 100 cp, dilution water was added and solution pH was then lowered to 2.5 immediately using sulfuric acid (2%) to quench the reaction between the glyoxal and the pending amide group. The terpolymer product was stored at 25°C in an aqueous medium until further testing, as described in the following examples. Table 2 lists the dosages of all the components used for glyoxalation. The product of the reaction was an aqueous composition containing the glyoxalated polyacrylamide polymer as an active content therein.

**Table 2. Glyoxalation dosages.**

| AM:Gly:DMAEAQ Product | Water (g) | Base Copolymer (g) | Glyoxal (40%) (g) | Sodium Pyrophosphate (g) | Dilution water (g) | Final active content (wt%) |
|---|---|---|---|---|---|---|
| | 900 | 40 | 20 | 2 | 60 | 4 |

### Example 3

### Performance Tests

Paper preparations and performance tests were conducted with the glyoxalated polyacrylamide terpolymer product of Example 2 as follows. One pound/ton is 500 ppm by weight.

### Retention, Drainage, and Turbidity Tests

The terpolymer product of Example 2, designated sample (1225-42), was applied to furnish obtained from a commercial papermaking mill. The performance at 0.5, 0.1, 0.2, 0.3, and 0.4 dry pounds terpolymer/ton dried fiber was compared against a comparison program which was a combination of X911 (2 lb./ton)/BFL5132 (1.3 lb./ton)/BFL5504 (2.6 lb./ton). BUFLOC® 5132 (cationic polyamine) and BUFLOC® 5504 (cationic polymer) are available from Buckman Laboratories International, Inc. (Memphis, Tennessee USA). X911 is for comparison, and is a commercially available product.

Drainage and retention were determined using a Mutek DFR-4 drainage/retention tester. A faster de-watering process indicates a higher production rate and lower energy consumption during the paper drying process. In a typical test, 800 mL furnish was added to a Mutek DFR-4 drainage/retention tester and was then sheared at 550 rpm for five seconds. The terpolymer or comparison additive program was then added to the furnish and the suspension was mixed at 550 rpm for an additional five seconds. The mixing was then stopped and the time of draining 550 mL water through a 60 mesh wire was recorded. Filtrate turbidity was recorded using a HACH 2100 turbidimeter. A lower turbidity indicates a higher retention efficiency.

As shown in FIG. 2, the bar graph displays drainage time and turbidity results for the terpolymer (1225-42) treated furnish at 0.05, 0.1, 0.2, 0.3, 0.4 dry lbs./ton. At each dosage, the bars are grouped in sets of three, wherein the left bar is for 150% change, the middle bar is for 250% change, and the right bar is for 350% change. The line in FIG. 2 is for turbidity. The results vary with an outstanding 60-85% improvement in drainage time and turbidity as compared to a comparison program. As shown in the results in FIG. 3, drainage and retention were improved using the terpolymer. The first comparison additive program on the X-axis (X911/BFL5132 & BFL 5504) represents the comparison benchmark for drainage and retention program. All data was compared to the comparison and reported as percent change.

The above bench retention and water drainage evaluation was repeated using the same sourced papermaking mill furnish after one month (about 28 days) storage of the same terpolymer composition (122542 sample) and comparison program at room temperature (about 25° C). FIG. 3 shows the retention/drainage and turbidity results of this study for the terpolymer (Am:Gly:DMAEAQ) ("1225-42") with dosages again set at 0.05, 0.1, 0.2, 0.3, 0.4, and 0.5 dry lbs./ton, and for those of the comparison program (X911/BFL5132/BFL5504) at the indicated dosages of its components (all in lb./ton). The results of this study showed excellent results, similar to the first study (FIG. 2), which demonstrated the repeatability of the results. The results of these studies also showed that the terpolymer product (1225-42) significantly improved retention and drainage up to an 80% improvement.

### Strength tests

Tensile strength tests - both dry and wet tensile strength tests were conducted. Also, Mullen (dry) burst strength tests and ring crush tests (wet) were carried out on handsheets treated with terpolymer (1225-42) and others treated with comparison programs, which were 911/BFL5132/BFL5504 and BBD408/MP830/BFL5504 at the indicated dosages in FIGS. 4 and 5 (all in lb./ton). BBD408 is BUBOND® 408, which is available from Buckman Laboratories International, Inc. MP830 is commercially available.

### Handsheet preparation.

Handsheets were prepared using furnish obtained from the same papermaking mill, which were prepared essentially according to Tappi standard method T205, with the following modifications:

(1) 1 wt% terpolymer or comparison program, as applicable, was added to 0.5 wt% furnish under shearing. (2) Four three-gram handsheets were prepared in a standard handsheet mould. (3) After two wet presses, the handsheets were dried for 15 minutes in an Emerson Speed Drier (Model 130) at 105°C. 4 kg weight was kept on the drier during the drying process. (4) The obtained handsheets were conditioned in a constant humidity room (50% humidity, 23°C) for 15 hours before testing.

### Handsheet physical property tests.

Tensile strength tests (dry) and burst (Mullen) strength tests were carried out based on Tappi standard methods T494 and T220 respectively. For wet tensile tests, each sample is cut to be one inch in width. After soaking in de-ionized water for 60 seconds, the sample is pulled at 1 in/min rate and the load at the failure is recorded.

FIG. 4 illustrates the impact of the terpolymer (1225-42) on tensile strength improvement at 0.1 and 0.2 lb./ton dosages as compared to the comparison strength/retention and drainage program (911/BFL5132/BFL5504). Additionally the terpolymer (1225-42) was compared against an alternative comparison strength/retention aid program (BBD 408, MP 830 and BFL 5504).

FIG. 5 illustrates the impact of the terpolymer (122542) on Burst strength improvement at 0.1 and 0.2 lb./ton dosages as compared to the comparison strength/retention and drainage program (911/BFL5132/BFL 5504). Additionally, as indicated, the terpolymer (1225-42) was compared against an alternative comparison strength/retention aid program (BBD 408, MP 830 and BFL 5504).

The results of these studies shown in FIGS. 4 and 5 demonstrate that the terpolymer formulations prepared in accordance with the present invention are effective for wet end management of retention, drainage, and strength programs.

### Example 4

### Performance Tests

Additional paper preparations and performance tests were conducted with the glyoxalated polyacrylamide terpolymer product of Example 2 as follows. One pound/ton is 500 ppm by weight.

### Strength tests

High humidity dry strength retention tests were conducted. Ring Crush tests were carried out on handsheets treated with the terpolymer product of Example 2, designated BLX14348 for this example, and others treated with comparison programs (positive controls) and a blank (a control with no polymer). The performance at 0.1, 0.2, 0.4, and 0.7 dry pounds terpolymer (BLX14348)/ton dried fiber was compared against BB408 and XP3106 at the indicated dosages in FIG. 6 (all in lb./ton). BB408 is BUBOND® 408, which is available from Buckman Laboratories International, Inc. XP3106 is for comparison, and is a commercially available product. BB408 was used at 8 lb./ton and XP3106 was used at 15 lb./ton. The blank handsheet (control), as indicated, was not treated with polymer.

### Handsheet preparation.

Handsheets were prepared using old corrugated containers (OCC) furnish obtained from a commercial papermaking mill, which were otherwise prepared essentially in the same manner as the handsheets in Example 3.

### Handsheet physical property tests.

Ring Crush tests (TAPPI T818) were performed on original samples of all the indicated types of the handsheets, and remaining samples of the handsheets were stored in high humidity (%RH) chamber for at least 24 hours. After a target moisture was reached for all the stored samples, a Ring Crush test was performed for all stored samples. Ring Crush strength retention (%) was determined based on a mathematical comparison of the original strength values and stored strength values for each type of handsheet that was tested. Mean values of Ring Crush % retention values were determined for each type of tested handsheet. The results are shown in FIG. 6.

The results in FIG. 6 show that the handsheets treated with a terpolymer of the present invention had greater high humidity dry strength retention compared to handsheets treated with the comparison compounds and the blank. The strength retention exceeded 70% of the original dry strength of the handsheet at the highest tested dosage of the terpolymer of the present invention. The strength retention was at least about 10% greater or more at all the tested dosages of the terpolymer of the present invention compared to the strength retentions of the comparison compounds, and at least about 30% greater or more at all the tested dosages of the terpolymer of the present invention compared to the strength retention of the blank. The results of these studies shown in FIG. 6 show that the terpolymer formulations prepared in accordance with the present invention can be effective for use in paper packaging where products are desired that enable the physical properties of paper board to remain unchanged, e.g., non-collapsed, after the board absorbs moisture from the air in high humidity conditions during storage.

The present invention can include any combination of these various features or embodiments above and/or below as set forth in sentences and/or paragraphs. Any combination of disclosed features herein is considered part of the present invention and no limitation is intended with respect to combinable features.

Further, when an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

Other embodiments of the present invention will be apparent to those skilled in the art from consideration of the present specification and practice of the present invention disclosed herein.

## Claims

1. A terpolymer comprising at least one pendant glyoxal monomer unit, at least one primary amide-containing monomer unit, and at least one cationic monomer unit, wherein the at least one cationic monomer unit is a quaternary ammonium alkyl(meth)acrylate halogen salt, said terpolymer having structure (I): 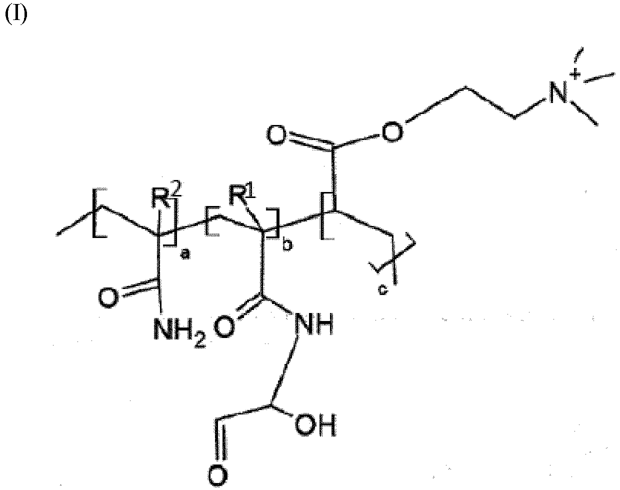 wherein a is 1 to 6600 units, b is 1 to 3300 units, and c is 1 to 5300 units which randomly or non-randomly repeat in structure (I), and each of R¹ and R², that are the same or different, represent H, C₁ alkyl, C₂ alkyl, C₃ alkyl, or C₄ alkyl, wherein total weight percent of a units is from 17% to 23%, total weight percent of b units is from 32% to 22%, and total weight percent of c units is from 51% to 55%, based on 100% of the terpolymer, and wherein said terpolymer has a weight average molecular weight ranging from 500,000 Daltons to 2,000,000 Daltons, measured by GPC.

2. The terpolymer of claim 1, wherein the at least one primary amide-containing monomer unit is acrylamide.

3. The terpolymer of claim 1, wherein the quaternary ammonium alkyl(meth)acrylate halogen salt has structure (II): 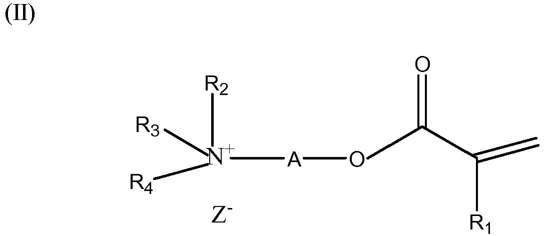 wherein R₁ is hydrogen or methyl, A is a straight chain alkylene group having 2 or 3 carbon atoms, Z is a halogen, and each of R₂, R₃, and R₄, which are the same or different, is C₁-C₃ alkyl group or benzyl group.

4. The terpolymer of claim 1, wherein the quaternary ammonium alkyl(meth)acrylate salt is ethanaminium,N,N,N-trimethyl-2-((1-oxo-2-propenyl)oxy)-chloride, (2-(methacryloyloxy)ethyl)trimethylammonium chloride, (3-(acryloyloxy)propyl)trimethylammonium chloride, (3-(methacryloyloxy)propyl)trimethylammonium chloride, (2-(acryloyloxy)ethyl)benzyl-dimethylammonium chloride, (2-(methacryloyloxy)ethyl)benzyl-dimethylammonium chloride, (3-(acryloyloxy)propyl)benzyl-dimethylammonium chloride, (3-(methacryloyloxy)propyl)benzyl-dimethylammonium chloride, or any combination thereof.

5. The terpolymer of claim 1, wherein the quaternary ammonium alkyl(meth)acrylate salt is ethanaminium,N,N,N-trimethyl-2-((1-oxo-2-propenyl)oxy)-chloride.

6. The terpolymer of claim 1, wherein the primary amide-containing monomer unit is acrylamide, methacrylamide, ethacrylamide, crotonamide, N-butyl acrylamide, N-methyl acrylamide, N-methyl methacrylamide, N-ethyl acrylamide, N-ethyl methacrylamide, N-isopropyl (meth)acrylamide, or any combination thereof.

7. A polymer composition comprising a terpolymer of claim 1 and an aqueous medium in which the terpolymer is dispersed.

8. A paper product selected from paper sheeting, paperboard, tissue paper, or wall board comprising the terpolymer of claim 1.

9. A product comprising a paper layer containing the terpolymer of claim 1, wherein the product is paper sheeting, paperboard, tissue paper, or wall board.

10. A process of making paper which comprises absorbing an amount of the terpolymer of claim 1 on cellulose papermaking fibers in aqueous suspension, forming the aqueous suspension into a web and drying the web, wherein the amount of terpolymer is effective to increase retention, drainage rate, or paper dry strength as compared to paper made with the suspension absent the terpolymer.

11. The process of claim 10, wherein the paper comprises from 0.1 pound to 1 pound terpolymer/ton dry fiber (50 to 500 ppm by weight).

12. The process of claim 10, wherein the terpolymer has been stored from 21 to 365 days at temperature from 35 to 85° F (1.7° C to 29° C) prior to said absorbing.

13. The process of claim 10, wherein the cellulose papermaking fibers comprise broke.

14. The process of claim 10, wherein the terpolymer is contacted with paper or paper board making pulp in a pulp stock prior to draining to provide a treated pulp suspension, then draining the pulp suspension, and forming a drained treated pulp suspension into paper or paperboard.

15. A process for making a terpolymer comprising:
copolymerizing from about 20 wt% to about 45 wt% of primary amide-containing monomer and from about 30 wt% to about 55 wt% of cationic monomer, that is copolymerizable with the primary amide-containing monomer, to form a base copolymer, wherein the cationic monomer comprises a quaternary ammonium alkyl(meth)acrylate halogen salt; and
copolymerizing the base copolymer with glyoxal to form a terpolymer comprising at least one pendant glyoxal monomer unit, said terpolymer having structure (I): 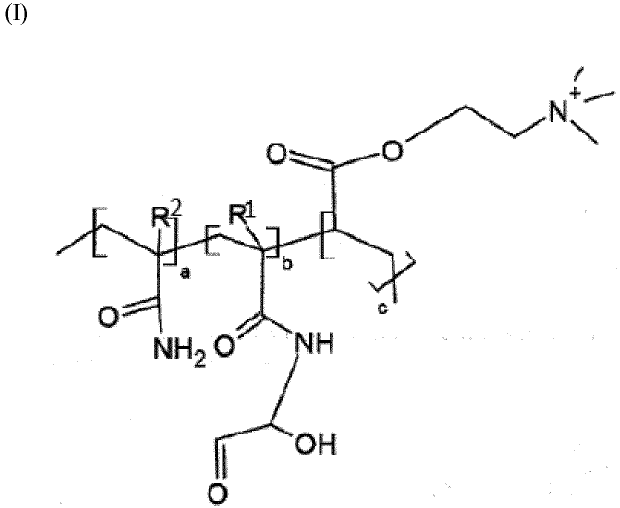 wherein a is 1 to 6600 units, b is 1 to 3300 units, and c is 1 to 5300 units which randomly or non-randomly repeat in structure (I), and each of R¹ and R², that are the same or different, represent H, C₁ alkyl, C₂ alkyl, C₃ alkyl, or C₄ alkyl, wherein total weight percent of a units is from 17% to 23%, total weight percent of b units is from 32% to 22%, and total weight percent of c units is from 51% to 55%, based on 100% of the terpolymer, and wherein said terpolymer has a weight average molecular weight ranging from 500,000 Daltons to 2,000,000 Daltons.

## Patentansprüche

1. Terpolymer umfassend zumindest eine anhängende Glyoxalmonomereinheit, zumindest eine primäres Amid enthaltende Monomereinheit und zumindest eine kationische Monomereinheit, wobei die zumindest eine kationische Monomereinheit ein quaternäres Ammoniumalkyl(meth)acrylat Halogensalz ist, wobei das Terpolymer die Struktur (I) aufweist: 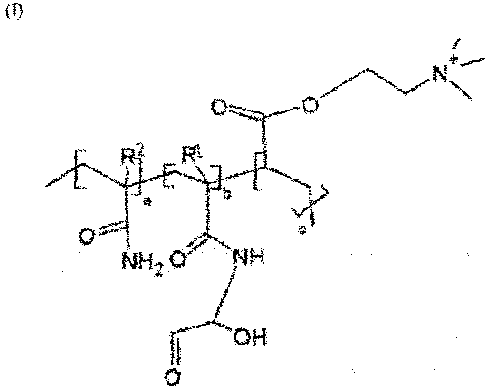 wobei a 1 bis 6600 Einheiten ist, b 1 bis 3300 Einheiten ist, und c 1 bis 5300 Einheiten ist, die sich zufällig oder nicht zufällig in Struktur (I) wiederholen, und wobei jedes von R¹ und R², die gleich oder unterschiedlich sind, H, C₁ Alkyl, C₂ Alkyl, C₃ Alkyl oder C₄ Alkyl repräsentieren, wobei die Gesamtgewichtsprozent von a-Einheiten 17% bis 23% betragen, die Gesamtgewichtsprozent von b-Einheiten 32% bis 22% betragen, und die Gesamtgewichtsprozent von c-Einheiten 51% bis 55% betragen, bezogen auf 100% des Terpolymers, und wobei das Terpolymer ein durchschnittliches Molekulargewicht im Bereich von 500.000 Dalton bis 2.000.000 Dalton, gemessen durch GPC, aufweist.

2. Terpolymer nach Anspruch 1, wobei die zumindest eine primäres Amid enthaltende Monomereinheit Acrylamid ist.

3. Terpolymer nach Anspruch 1, wobei das quaternäre Ammoniumalkyl(meth)acrylat Halogensalz die Struktur (II) aufweist: 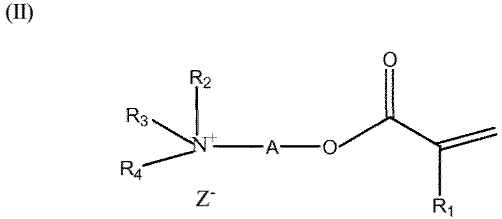 wobei R₁ Wasserstoff oder Methyl ist, A eine gradkettige Alkylengruppe ist, die 2 oder 3 Kohlenstoffatome aufweist, Z ein Halogen ist, und jedes von R₂, R₃ und R₄, die gleich oder unterschiedlich sind, eine C₁-C₃ Alkylgruppe oder Benzylgruppe ist.

4. Terpolymer nach Anspruch 1, wobei das quaternäre Ammoniumalkyl(meth)acrylat Salz
Ethanaminium,N,N,N-trimethyl-2-((1-oxo-2-propenyl)oxy)chlorid,
(2-(Methacryloyloxy)ethyl)trimethylammoniumchlorid,
(3-(Acryloyloxy)propyl)trimethylammoniumchlorid,
(3-(Methacryloyloxy)propyl)trimethylammoniumchlorid,
(2-(Acryloyloxy)ethyl)benzyldimethylammoniumchlorid,
(2-(Methacryloyloxy)ethyl)benzyldimethylammoniumchlorid,
(3-(Acryloyloxy)propyl)benzyldimethylammoniumchlorid,
(3-(Methacryloyloxy)propyl)benzyldimethylammoniumchlorid
oder eine beliebige Kombination dieser ist.

5. Terpolymer nach Anspruch 1, wobei das quaternäre Ammoniumalkyl(meth)acrylat Salz Ethanaminium,N,N,N-trimethyl-2-((1-oxo-2-propenyl)oxy)chlorid ist.

6. Terpolymer nach Anspruch 1, wobei die primäres Amid enthaltende Monomereinheit Acrylamid, Methacrylamid, Ethacrylamid, Crotonamid, N-Butylacrylamid, N-Methylacrylamid, N-Methylmethacrylamid, N-Ethylacrylamid, N-Ethylmethacrylamid, N-Isopropylmethacrylamid oder eine beliebige Kombination davon ist.

7. Polymerzusammensetzung, umfassend ein Terpolymer nach Anspruch 1 und ein wässriges Medium, in dem das Terpolymer dispergiert ist.

8. Papierprodukt, ausgewählt aus Papierfolie, Pappe, Papiertuch oder Wandpappe, umfassend das Terpolymer nach Anspruch 1.

9. Produkt, umfassend eine Papierschicht, die das Terpolymer nach Anspruch 1 enthält, wobei das Produkt Papierfolie, Pappe, Papiertuch oder Wandpappe ist.

10. Verfahren zum Herstellen von Papier, umfassend das Absorbieren einer Menge des Terpolymers nach Anspruch 1 auf Cellulose-Papiererzeugungsfasern in wässriger Suspension, Bilden der wässrigen Suspension zu einer Bahn und Trocknen der Bahn, wobei die Menge des Terpolymers wirksam ist, um die Retention, Abflussrate oder Papier-Trockenfestigkeit im Vergleich zu Papier zu erhöhen, das mit der Suspension ohne das Terpolymer hergestellt wurde.

11. Verfahren nach Anspruch 10, wobei das Papier von 0,1 Pfund bis 1 Pfund Terpolymer / Tonne Trockenfaser (50 bis 500 Gewichts-ppm) umfasst.

12. Verfahren nach Anspruch 10, wobei das Terpolymer vor dem Absorbieren 21 bis 365 Tage bei einer Temperatur von 35 bis 85 °F (1,7 °C bis 29 °C) gelagert wurde.

13. Verfahren nach Anspruch 10, wobei die Cellulose-Papiererzeugungsfasern Ausschuss umfassen.

14. Verfahren nach Anspruch 10, wobei das Terpolymer mit Papier- oder Karton-Faserstoffaufschwemmung in einem Aufschwemmungsmaterial vor dem Trockenlegen kontaktiert wird, um eine behandelte Faserstoffaufschwemmungssuspension bereitzustellen, die Faserstoffaufschwemmungssuspension danach trockengelegt wird, und eine trockengelegte Faserstoffaufschwemmungssuspension eu Papier oder Karton gebildet wird.

15. Verfahren zur Herstellung von Terpolymer, Folgendes umfassend:
Copolymerisieren von etwa 20 Gew.--% bis etwa 45 Gew.-% eines primäres Amid enthaltenden Monomers und von etwa 30 Gew.--% bis etwa 55 Gew.-% von kationischem Monomer, das mit dem primäres Amid enthaltenden Monomer copolymerisierbar ist, um ein Basis-Copolymer zu bilden, wobei das kationische Monomer ein quaternäres Ammoniumalkyl(meth)acrylat Halogensalz umfasst; und
Copolymerisieren des Basis-Copolymers mit Glyoxal zum Bilden eines Terpolymers, umfassend mindestens eine anhängende Glyoxalmonomereinheit, wobei das Terpolymer die Struktur (I) aufweist: 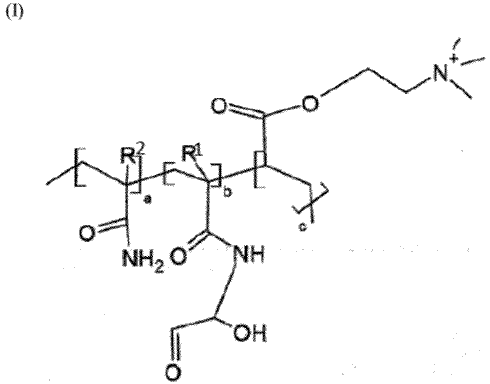 wobei a 1 bis 6600 Einheiten ist, b 1 bis 3300 Einheiten ist, und c 1 bis 5300 Einheiten ist, die sich zufällig oder nicht zufällig in Struktur (I) wiederholen, und wobei jedes von R¹ und R², die gleich oder unterschiedlich sind, H, C₁ Alkyl, C₂ Alkyl, C₃ Alkyl oder C₄ Alkyl repräsentieren, wobei die Gesamtgewichtsprozent von a-Einheiten 17% bis 23% betragen, die Gesamtgewichtsprozent von b-Einheiten 32% bis 22% betragen, und die Gesamtgewichtsprozent von c-Einheiten 51% bis 55% betragen, bezogen auf 100% des Terpolymers, und wobei das Terpolymer ein durchschnittliches Molekulargewicht im Bereich von 500.000 Dalton bis 2.000.000 Dalton aufweist.

## Revendications

1. Terpolymère comprenant au moins une unité pendant de monomère de glyoxal, au moins une unité de monomère contenant un amide primaire, et au moins une unité de monomère cationique, dans lequel l'au moins une unité de monomère cationique est un sel d'ammonium quaternaire alkyl(méth)acrylate halogène, ledit terpolymère présentant la structure (I) : 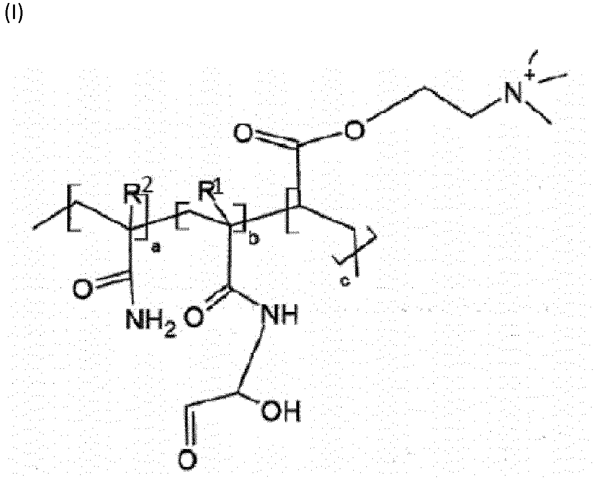 dans lequel a est 1 à 6 600 unités, b est 1 à 3 300 unités, et c est 1 à 5 300 unités qui se répètent de manière aléatoire ou non aléatoire dans une structure (I), et chacun parmi R¹ et R², qui sont identiques ou différents, représente H, un alkyle en C₁, un alkyle en C₂, un alkyle en C₃, ou un alkyle en C₄, dans lequel un pourcentage en poids total d'unités a va de 17 % à 23 %, et un pourcentage en poids total d'unités b va de 32 % à 22 %, et un pourcentage en poids total d'unités c va de 51 % à 55 %, sur la base de 100 % du terpolymère, et dans lequel ledit terpolymère présente un poids moléculaire moyen en poids dans la plage de 500 000 Daltons à 2 000 000 Daltons, mesuré par CPG.

2. Terpolymère selon la revendication 1, dans lequel l'au moins une unité monomère contenant un amide primaire est de l'acrylamide.

3. Terpolymère selon la revendication 1, dans lequel le sel d'ammonium quaternaire alkyl(méth)acrylate halogène présente une structure (II) : 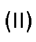 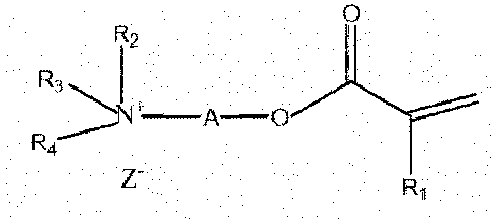 dans lequel R₁ est un hydrogène ou un méthyle, A est un groupe alkylène à chaîne droite présentant 2 à 3 atomes de carbone, Z est un halogène, et chacun de R₂, R₃, et R₄, qui sont identiques ou différents, est un groupe alkyle en C₁ à C₃ ou un groupe benzyle.

4. Terpolymère selon la revendication 1, dans lequel le sel d'ammonium quaternaire alkyl(méth)acrylate halogène est un chlorure d'éthanaminium,N,N,N-triméthyl-2-((1-oxo-2-propenyl)oxy), un chlorure de (2-(méthacryloyloxy)éthyl)triméthylammonium, un chlorure de (3-(acryloyloxy)propyl)triméthylammonium, un chlorure de (3-(méthacryloyloxy)propyl)triméthylammonium, un chlorure de (2-(acryloyloxy)ethyl)benzyl-dimethylammonium, un chlorure de (2-(methacryloyloxy)ethyl)benzyl-dimethylammonium, un chlorure de (3-(acryloyloxy)propyl)benzyl-dimethylammonium, un chlorure de (3-(methacryloyloxy)propyl)benzyl-dimethylammonium, ou une quelconque combinaison de ceux-ci.

5. Terpolymère selon la revendication 1, dans lequel le sel d'ammonium quaternaire alkyl(méth)acrylate halogène est un chlorure d'éthanaminium,N,N,N-trimethyl-2-((1-oxo-2-propenyl)oxy).

6. Terpolymère selon la revendication 1, dans lequel l'unité de monomère contenant un amide primaire est un acrylamide, un méthacrylamide, un éthacrylamide, un crotonamide, un N-butyle acrylamide, un N-méthyle acrylamide, un N-méthyle méthacrylamide, un N-éthyle acrylamide, un N-éthyle méthacrylamide, un N-isopropyle (méth)acrylamide, ou une quelconque combinaison de ceux-ci.

7. Composition polymère comprenant un terpolymère selon la revendication 1 et un moyen aqueux dans lequel le terpolymère est dispersé.

8. Produit papier choisi parmi un tirage papier, un carton, un mouchoir en papier, ou un panneau mural comprenant le terpolymère selon la revendication 1.

9. Produit comprenant une couche de papier contenant le terpolymère selon la revendication 1, dans lequel le produit est un tirage papier, un carton, un mouchoir en papier, ou un panneau mural.

10. Processus de fabrication de papier qui comprend l'absorption d'une quantité du terpolymère selon la revendication 1 sur des fibres de cellulose pour la fabrication de papier dans une suspension aqueuse, formant une toile avec la suspension aqueuse et séchant la toile, dans lequel la quantité de terpolymère est efficace pour augmenter la rétention, la vitesse d'assèchement, ou la résistance à l'état sec d'un papier en comparaison avec du papier fabriqué avec la suspension et sans le polymère.

11. Processus selon la revendication 10, dans lequel le papier comprend de 0,1 livre à 1 livre de terpolymère/tonne de fibre sèche (50 à 500 ppm en poids).

12. Processus selon la revendication 10, dans lequel le terpolymère a été stocké entre 21 et 365 jours à une température entre 35 et 85 °F (entre 1,7 °C et 29 °C) avant ladite absorption.

13. Processus selon la revendication 10, dans lequel les fibres papetières de cellulose comprennent des rejets.

14. Processus selon la revendication 10, dans lequel le terpolymère est mis en contact avec du papier ou du carton pour faire de la pâte dans une pâte à papier avant d'assécher pour fournir une suspension de pâte traitée, ensuite assécher la suspension de pâte, et former du papier ou du carton à partir d'une suspension de pulpe traitée asséchée.

15. Processus de fabrication d'un terpolymère comprenant :
la copolymérisation d'environ 20 % en poids à environ 45 % en poids d'un monomère contenant un amide primaire et d'environ 30 % en poids à environ 55 % en poids d'un monomère cationique, qui peut être copolymérisé avec le monomère contenant un amide primaire, pour former un copolymère de base, dans lequel le monomère cationique comprend un sel d'ammonium quaternaire alkyl(méth)acrylate halogène ; et
la copolymérisation du copolymère de base avec du glyoxal pour former un terpolymère comprenant au moins une unité pendant de monomère de glyoxal, ledit terpolymère présentant un structure (I) : 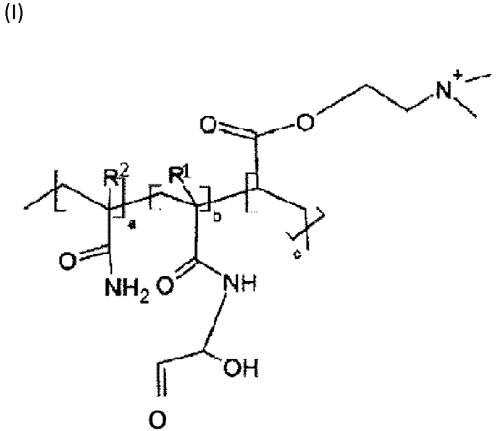 dans lequel a est 1 à 6 600 unités, b est 1 à 3 300 unités, et c est 1 à 5 300 unités qui se répètent de manière aléatoire ou non aléatoire dans une structure (I), et chacun parmi R¹ et R², qui sont identiques ou différents, représente H, un alkyle en C₁, un alkyle en C₂, un alkyle en C₃, ou un alkyle en C₄, dans lequel un pourcentage en poids total d'unités a va de 17 % à 23 %, et un pourcentage en poids total d'unités b va de 32 % à 22 %, et un pourcentage en poids total d'unités c va de 51 % à 55 %, sur la base de 100 % du terpolymère, et dans lequel ledit terpolymère présente un poids moléculaire moyen en poids dans la plage de 500 000 Daltons à 2 000 000 Daltons.
